# EUROPEAN PATENT SPECIFICATION

(11) **EP 4 456 302 B1**
(45) Date of publication and mention of the grant of the patent: **27.08.2025**
(21) Application number: 23211114.6
(22) Date of filing: 21.11.2023
(51) Int. Cl.: H01M 50/358, H01M 10/48, H01M 50/284, H01M 50/211, H01M 50/383, H01M 50/548

(54) **BATTERY MODULE**
BATTERIEMODUL
MODULE DE BATTERIE

(30) Priority: 27.04.2023 CN 202321009800 U; 27.04.2023 CN 202321010119 U; 27.04.2023 CN 202321009570 U
(43) Date of publication of application: 30.10.2024
(73) Proprietor: Eve Energy Co. Ltd., Huizhou, Guangdong 516000 (CN)
(72) Inventor: Ma, Jinsi, Huizhou, Guangdong, 516000 (CN)
(74) Representative: Petraz, Gilberto Luigi

(56) References cited:
- WO-A1-2022/203291
- CN-A- 115 764 149

## Description

The present application claims priority of Chinese Patent Application No.202321009800.0 filed on April 27, 2023 before CNIPA, Chinese Patent Application No.202321010119.8 filed on April 27, 2023 before CNIPA, and Chinese Patent Application No.202321009570.8 filed on April 27, 2023 before CNIPA.

### Field

The present application relates to the technical field of batteries, in particular to a battery module.

### Background

Lithium batteries applied to new energy vehicles include prismatic batteries and cylinder batteries, of which prismatic batteries include pouch batteries and hard-pack batteries, of which hard-pack batteries include blade batteries, and blade batteries are significantly guiding the market with their ultra-high energy density. Different from a typical prismatic battery, two electrode columns of a blade battery are provided oppositely in a length direction of the battery.

When assembling existing blade batteries into a battery module, aerogel is provided between adjacent blade batteries to insulate the batteries by the aerogel in case thermal runaway occurs. However, the explosion-proof valve of the blade battery is still exposed, and when the high-temperature electrolyte is ejected from the explosion-proof valve, it will still splash onto other blade batteries, thereby affecting the operating safety of the entire battery module.

Patent documents CN115764149A and WO2022203291A1 disclose battery modules with pressure relief channels and venting channels, respectively.

### Summary

In order to solve at least one of the existing problems of the prior art mentioned above, according to an aspect of the present application, provided is a battery module, including: a battery group, the battery group including a plurality of batteries, the battery including a positive electrode column and a negative electrode column, the positive electrode column and the negative electrode column being provided oppositely in a length direction of the battery; a cells contact system (hereinafter referred as CCS) assembly, provided on a side of the battery group, electrically connected to the battery group, used for collecting and transferring an electrical signal of the battery group; a beam, provided opposite the CCS assembly, a pressure relief channel being provided within the beam; and a guiding structure, connected between the battery group and the beam, the guiding structure being provided with a plurality of guiding channels, each guiding channel being in communication with the pressure relief channel, each guiding channel being provided corresponding to an explosion-proof valve of the battery, wherein the guiding channel is used for guiding high-temperature gas and/or high-temperature fluid ejected from the explosion-proof valve into the pressure relief channel when thermal runaway occurs in the battery.

By providing a guiding structure, the guiding structure is provided with a plurality of guiding channels, each guiding channel being provided corresponding to an explosion-proof valve of the battery. When a thermal runaway occurs in a battery, the high-temperature gas or fluid ejected from the explosion-proof valve may flow to the pressure relief channel through the guiding structure and be dispersed through the beam, avoiding splashing to the surrounding batteries and affecting the operating safety of the entire battery module. Therefore, the safety of the entire battery module is improved by providing a guiding structure.

In some implementations, the CCS assembly includes: a supporting frame, provided in a height direction of the battery, supported on a lateral side of the battery group; a connection plate, mounted on the supporting frame, electrically connected to the positive electrode column and the negative electrode column respectively; and a collecting structure, mounted on the supporting frame, electrically connected to the connection plate and the battery group respectively, the collecting structure being used for transferring the electrical signal of the battery group.

By providing a supporting frame, the supporting frame may provide support in a height direction of the battery group, and the supporting frame is a structure with a certain degree of hardness, which may facilitate support and installation between the connection plate and the collecting structure. When installing the connection plate and the collecting structure on the supporting frame to form a CCS assembly, the entire CCS assembly may be clamped by mechanization, which achieves the mechanized installation between the CCS assembly and the battery group, thereby improving the assembling efficiency of the entire battery module.

In some implementations, the connection plate includes a plurality of sub-plates, the supporting frame being provided with a plurality of mounting holes, each sub-plate being mounted into each mounting hole.

In some implementations, a reserved gap is provided between the sub-plate and an interior wall of the mounting hole.

In some implementations, the connection plate is detachably connected to the supporting frame.

In some implementations, the connection plate is snap-fitted to the supporting frame.

In some implementations, the collecting structure includes a flexible printed circuit (FPC), a connector electrically connected to the FPC, a plurality of electrical signal collecting members and a plurality of temperature collecting members, the electrical signal collecting member being electrically connected to the connection plate, the temperature collecting member being electrically connected to the battery; the FPC is connected to the supporting frame, including a first segment and a second segment connected with each other, the first segment extending in an alignment direction of each battery, the second segment being provided on a side of the battery in a thickness direction, wherein the first segment is used for mounting the electrical signal collecting member and the temperature collecting member, and the second segment is used for mounting the connector.

In some implementations, the collecting structure also includes a fuse protection structure, and the fuse protection structure is provided on the second segment.

In some implementations, the fuse protection structure is a patch fuse, and the patch fuse is welded to the second segment.

In some implementations, the FPC is connected to the supporting frame by hot riveting.

In some implementations, a mounting structure is provided on the supporting frame, and the mounting structure is used for mounting a lateral cap.

In some implementations, the mounting structure is detachably connected to the lateral cap.

In some implementations, the supporting frame is a composite supporting frame made of polycarbonate (PC) and acrylonitrile butadiene styrene (ABS).

In some implementations, a weight-loss hole and an escaping hole corresponding to the explosion-proof valve of the battery are provided on the supporting frame.

In some implementations, an end of the guiding structure is fixedly connected to the battery group, and an opposite end of the guiding structure is detachably connected to a beam.

In some implementations, the guiding structure includes a plurality of independent guiding member, each guiding member being formed each guiding channel, each guiding member being provided corresponding to each explosion-proof valve.

In some implementations, the guiding member includes a tube body, a first sealing ring and a second sealing ring provided at opposite ends of the tube body, the first sealing ring being bonded to the battery, the second sealing ring being snap-fitted to the beam.

In some implementations, the tube body is a metal tube.

In some implementations, a shape of the tube body is adapted to a shape of the explosion-proof valve.

In some implementations, a length range of the tube body in a length direction of the battery is 2~5cm.

In some implementations, the tube body includes a main body, a first mounting platform and a second mounting platform that are provided at opposite ends of the main body; the first mounting platform protrudes from the main body along a perimeter of the main body, the first mounting platform being used for mounting the first sealing ring; and the second mounting platform protrudes from the main body along a perimeter of the main body, the second mounting platform being used for mounting the second sealing ring.

In some implementations, a first groove is provided on the first mounting platform in a side towards the battery, and the first sealing ring is provided in the first groove.

In some implementations, a snap-fit groove is provided on a side wall of the first mounting platform, and the supporting frame is snap-fitted in the snap-fit groove.

In some implementations, a pressure relief channel extends in an alignment direction of the battery and penetrates the beam.

In some implementations, the beam is provided with at least one reinforcing ribs in the pressure relief channel, and the reinforcing rib is extended in a horizontal direction.

### Brief description of the drawings

Fig. 1 is a structural diagram of a view of the battery in some embodiment of the present application.
Fig. 2 is a structural diagram of another view of the battery in Fig. 1.
Fig. 3 is a structural diagram of the battery module in some embodiment of the present application.
Fig. 4 is a structural diagram of the battery module in Fig. 3 with a beam concealed.
Fig. 5 is a disassembly diagram of the CCS assembly and the guiding structure in Fig. 3.
Fig. 6 is another disassembly diagram of the CCS assembly and the guiding structure in Fig. 3.
Fig. 7 is a structural diagram of the CCS assembly in Fig. 3.
Fig. 8 is an enlarged view of Fig. 7 at I.
Fig. 9 is a disassembly diagram of the CCS assembly in Fig. 7.
Fig. 10 is a top view of the CCS assembly in Fig. 7.
Fig. 11 is a structural diagram of the supporting frame in Fig. 5.
Fig. 12 is an enlarged view of Fig. 11 at II.
Fig. 13 is a perspective view of the guiding member in Fig. 4.
Fig. 14 is a disassembly diagram of the guiding member in Fig. 13.
Fig. 15 is a structural diagram of the guiding member in Fig. 13.
Fig. 16 is a structural diagram of the beam and the guiding member in Fig. 3.
Fig. 17 is a disassembly diagram of the beam and the guiding member in Fig. 3.
Fig. 18 is an enlarged view of Fig. 17 at III.

The meanings of the attached markings are as follows:
100 battery module; 10 battery group; 11 battery; 111 positive electrode column; 112 negative electrode column; 113 explosion-proof valve; 20 CCS assembly; 21 supporting frame; 211 mounting hole; 212 buckle; 213 hot riveting post; 214 gap; 215 mounting structure; 2151 connection piece; 2152 snap-fit protrusion; 216 weight-loss hole; 217 escaping hole; 22 connection plate; 221 sub-plate; 23 collecting structure; 231 flexible printed circuit (FPC); 2311 first segment; 2312 second segment; 232 temperature collecting member; 233 electrical signal collecting member; 234 connector; 235 fuse protection structure; 30 beam; 31 pressure relief channel; 32 first stepped snap-fit position; 33 second stepped snap-fit position; 34 through-hole; 35 reinforcing rib; 40 guiding structure; 41 guiding channel; 42 guiding member; 421 tube body; 4211 first mounting platform; 4212 first groove; 4213 second mounting platform; 4214 snap-fit groove; 4215 main body; 422 first sealing ring; 423 second sealing ring.

### Detailed description of the preferred embodiments

The present application is described in further detail below in conjunction with the attached drawings.

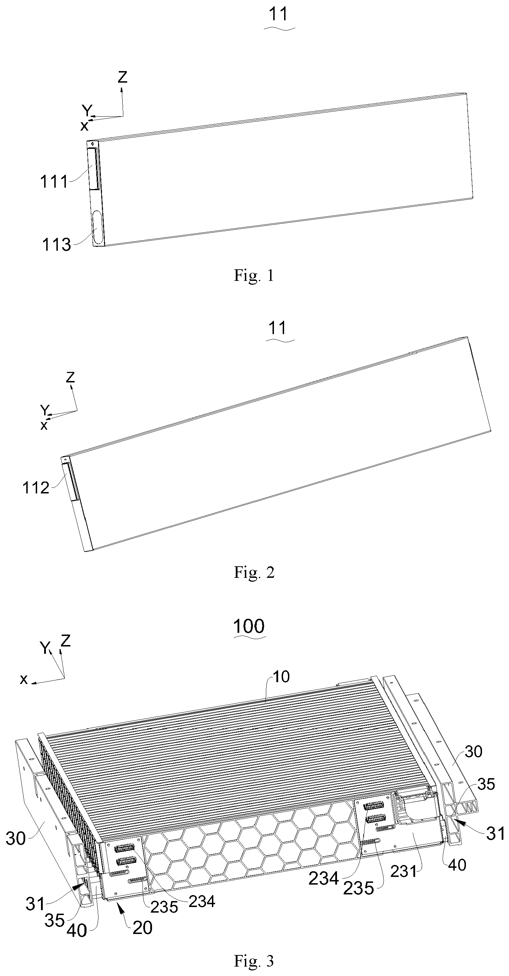

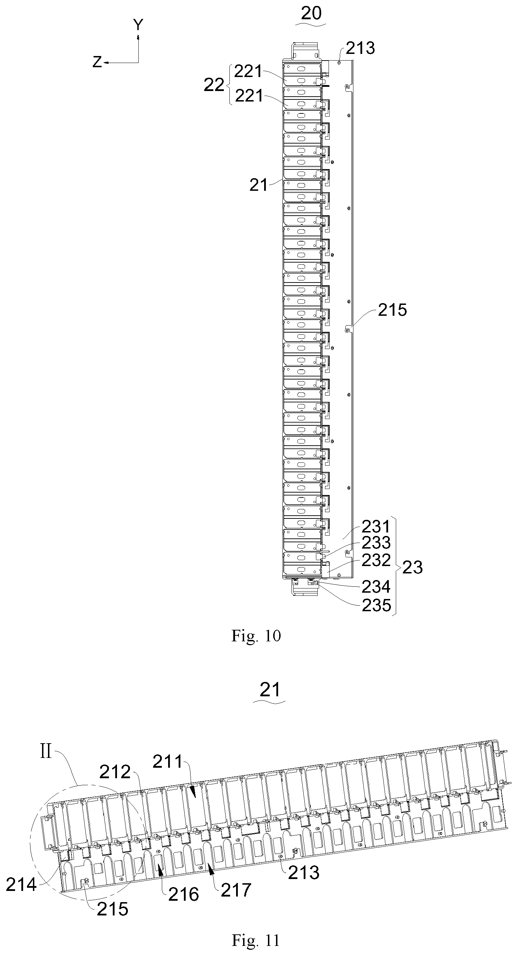

Referring to Fig. 1 to Fig. 18, provided in an embodiment of the present application is a battery module 100, including a battery group 10, a CCS assembly 20, a beam 30 and a guiding structure 40.

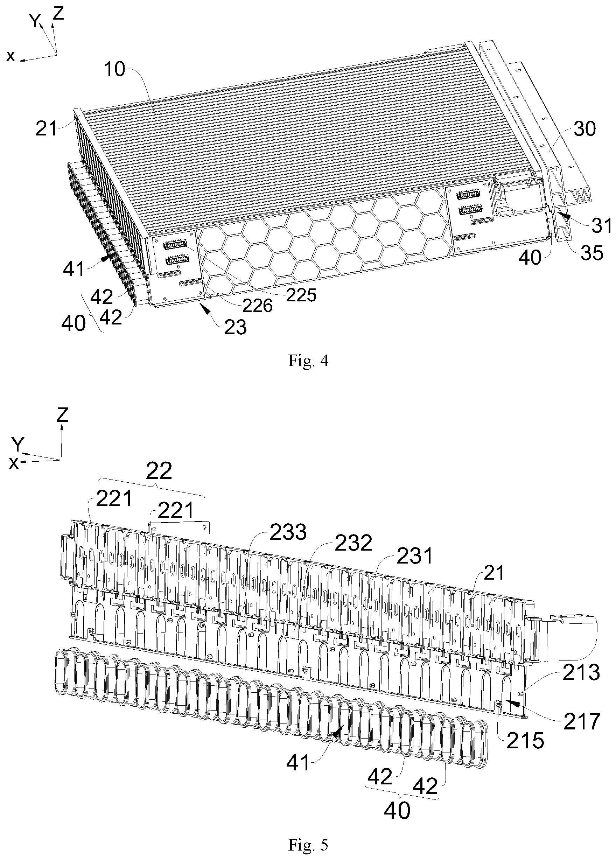

Referring to Fig. 3 and Fig. 4, the battery group 10 includes a plurality of batteries 11, the battery 11 including a positive electrode column 111 and a negative electrode column 112, the positive electrode column 111 and the negative electrode column 112 being provided oppositely in a length direction X of the battery 11; a CCS assembly 20, provided on a side of the battery group 10, electrically connected to the battery group 10, used for collecting and transferring an electrical signal of the battery group 10; a beam 30, provided opposite the CCS assembly 20, a pressure relief channel 31 being provided within the beam 30; and a guiding structure 40, connected between the battery group 10 and the beam 30, the guiding structure 40 being provided with a plurality of guiding channels 41, each guiding channel 41 being in communication with the pressure relief channel 31, each guiding channel 41 being provided corresponding to an explosion-proof valve 113 of the battery 11, wherein the guiding channel 41 is used for guiding high-temperature gas and/or high-temperature fluid ejected from the explosion-proof valve 113 into the pressure relief channel 31 when thermal runaway occurs in the battery 11.

By providing a guiding structure 40 in the battery module 100, the guiding structure 40 is provided with a plurality of guiding channels 41, each guiding channel 41 being provided corresponding to an explosion-proof valve 113 of the battery 11. When a thermal runaway occurs in a battery 11, the high-temperature gas or fluid ejected from the explosion-proof valve 113 may flow to the pressure relief channel 31 through the guiding structure 40 and be dispersed through the beam 30, avoiding splashing to the surrounding batteries 11 and affecting the operating safety of the entire battery module 100. Therefore, the safety of the entire battery module 100 is improved by providing a guiding structure 40.

It is to be noted that, referring to Fig. 1 and Fig. 2, the battery 11 of the present embodiment is a blade battery, a positive electrode column 111 and a negative electrode column 112 of the blade battery being provided at opposite ends of the battery 11 in a length direction X, the explosion-proof valve 113 and the positive electrode column 111 are provided at the same end of the battery 11. The length direction X of the battery 11 is a width direction of the battery module 100; the width direction Y of the battery 11 is an alignment direction of the battery 11; and the height direction Z of the battery 11 is a height direction Z of the battery module 100. When batteries 11 are aligned as the battery group 10, a large surface of one battery 11 is provided towards a large surface of another battery 11. That is, the batteries 11 are provided side by side with each other along a thickness direction of the batteries 11, and the positive electrode columns 111 and the negative electrode columns 112 of the batteries 11 are aligned as alternating with each other.

Referring to Fig. 4 to Fig. 6, the guiding structure 40 of the present embodiment penetrates the CCS assembly 20 when assembling. That is, the CCS assembly 20 is provided on a side of the battery group 10 in the X direction when assembling.

Specifically, referring to Fig. 4 to Fig. 12, in order to facilitate the installation of the entire CCS assembly 20, and improve the mounting efficiency of the entire CCS assembly 20, the CCS assembly 20 includes a supporting frame 21, a connection plate 22 and a collecting structure 23, wherein the supporting frame 21 is provided on the battery 11 in the height direction Z and supports a lateral side of the battery group 10; the connection plate 22 is mounted on the supporting frame 21 and electrically connected to the positive electrode column 111 and the negative electrode column 112 respectively; and the collecting structure 23 is mounted on the supporting frame 21 and electrically connected to the connection plate 22 and the battery group 10 respectively, used for transferring the signal of the battery group 10. By providing a supporting frame 21, the supporting frame 21 may provide support in a height direction Z of the battery group 10, and the supporting frame 21 is a structure with a certain degree of hardness, which may facilitate support and installation between the connection plate 22 and the collecting structure 23. When installing the connection plate 22 and the collecting structure 23 on the supporting frame 21 to form a CCS assembly 20, the entire CCS assembly 20 may be clamped by mechanization, which achieves the mechanized installation between the CCS assembly 20 and the battery group 10, thereby improving the assembling efficiency of the entire battery module 100.

Specifically, referring to Fig. 5 to Fig. 7, Fig. 9 and Fig. 10, the collecting structure 23 includes an FPC 231, a plurality of temperature collecting members 232 electrically connected to the FPC 231, a plurality of electrical signal collecting members 233 and a connector 234. The connection plate 22 and the FPC 231 are provided sequentially from top to bottom in the height direction Z of the battery 11. The connection plate 22 is used for achieving the electrical connection of the battery group 10, specifically, electrically connected to the positive electrode column 111 and the negative electrode column 112 respectively, so as to achieve the series connection within the battery group 10. The electrical signal collecting member 233 is used for collecting the voltage signal of the battery group 10, specifically, electrically connected between the connection plate 22 and the FPC 231, so as to transfer the electrical signal to the FPC 231. The temperature collecting member 232 is used for collecting the temperature signal of the battery group 10, specifically, electrically connected between the battery 11 and the FPC 231, so as to transfer the temperature signal of the battery group 10 to the FPC 231. In such a setup, the electrical connection with the battery group 10 is achieved by the connection plate 22; the voltage signal of the battery group 10 transferred to the FPC 231 is achieved by the electrical signal collecting member 233; the temperature signal of the battery group 10 transferred to the FPC 231 is achieved by the temperature collecting member 232; and finally the signal transferring with external structures is achieved by the connector 234, for example, the signal transferring with the battery management system (BMS).

The guiding structure 40 penetrating the CCS assembly 20 when assembling, specifically, penetrates the supporting frame 21 and the FPC 231.

Referring to Fig. 5 to Fig. 7, Fig. 9 and Fig. 10, when electrically connecting the connection plate 22 to the battery group 10, the connection plate 22 includes a plurality of sub-plates 221, the supporting frame 21 being provided with a plurality of mounting holes 211, wherein each sub-plate 221 is mounted into each mounting hole 211, and each sub-plate 221 is connected to the positive electrode column 111 and the negative electrode column 112 of each two adjacent batteries 11, so as to achieve the series connection of the battery group 10 by the connection plate 22 when mounting the CCS assembly 20 to the battery group 10. That is, current flows from a positive electrode column 111 of a battery 11 to a negative electrode column 112, and flows from the negative electrode column 112 to a positive electrode column 111 of an adjacent battery 11, so that a series connection within the battery group 10 is achieved.

Specifically, each sub-plate 221 in the present embodiment is welded between a positive electrode column 111 and a negative electrode column 112 of each two adjacent batteries 11, which achieves electrical connection and also the conductivity of current.

The connection plate 22 in the present embodiment is an aluminum plate, which may be a copper plate in the other embodiments, which is not limited hereby.

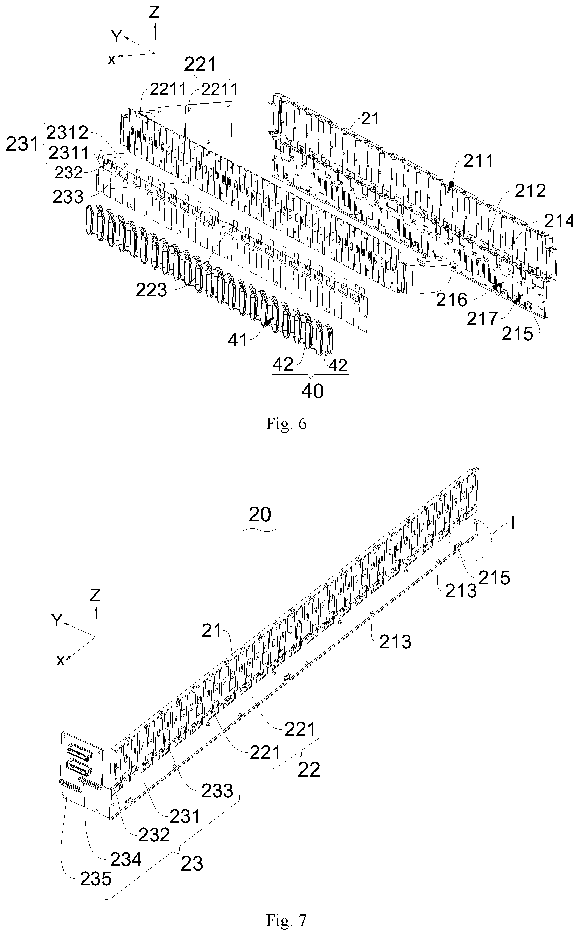

Specifically, referring to Fig. 6, Fig. 9, Fig. 11 and Fig. 12, when mounting each sub-plate 221 to the supporting frame 21, the supporting frame 21 includes a plurality of mounting holes 211, and each sub-plate 221 is mounted into each mounting hole 211. By providing mounting holes 211 on the supporting frame 21, not only is the positioning of the sub-plate 211 is achieved, but also the installation of the sub-plate 211 is achieved.

It is to be understood that, since the sub-plate 211 is required to connect a positive electrode column 111 and a negative electrode column 112 of each two adjacent batteries 11, a shape of the mounting hole 211 is adapted to a shape of the sub-plate 211. For example, the sub-plate 221 is pentagon in shape, and the mounting hole 211 is also pentagon in shape, so that the sub-plate 221 is just correspondingly mounted into the mounting hole 211.

Referring to Fig. 6, Fig. 9, Fig. 11 and Fig. 12, in an embodiment of the present application, when mounting the sub-plate 221 into the mounting hole 211 and before welding the connection plate 22 to electrode columns, the connection plate 22 is detachably mounted into the mounting hole 211. That is, each sub-plate 211 is correspondingly detachably mounted into each mounting hole 211, so that each position of the sub-plate 221 corresponding to the battery 11 is adjusted into the position of the mounting hole 211.

Specifically, before welding each sub-plate 221 to electrode columns, the supporting frame 21 is provided with a buckle 212, and the buckle 212 is used for setting the sub-plate 221 into the mounting hole 211. That is, the sub-plate 221 is detachably mounted into the mounting hole 211 by snap-fitting.

Before welding each sub-plate 221 to electrode columns, in order to ensure the mounting stability of the sub-plate 221 mounted into the mounting hole 211, the supporting frame 21 is provided with a plurality of buckles 212 corresponding to each position of the mounting hole 211, and a plurality of buckles 212 are separately provided on a plurality of side walls of the mounting holes 211, so as to fix the sub-plate 221 from multiple directions, thereby ensuring the stability of the sub-plate 221 mounted into the mounting hole 211.

Since the sub-plate 221 is snap-fitted into the mounting hole 211 by the buckle 212, when applied to the CCS assembly 20, the CCS assembly 20 is required to be mounted on a lateral side of the battery group 10, so that errors may occur in the alignment installation of the CCS assembly 20 and the battery group 10 when mounting the CCS assembly 20. In order to achieve the alignment of the position of the connection plate 22 and columns, a reserved gap 214 is provided between the connection plate 22 and an internal wall of the mounting hole 211, so that the position of the sub-plate 221 may be adjusted to align each adjacent two electrode columns when mounting the CCS assembly 20 and the battery group 10, and the sub-plate 221 is welded to two electrode columns respectively. In such a setup, since a reserved gap 214 is provided between the connection plate 22 and an internal wall of the mounting hole 211, errors may be adjusted, which facilitates the welding of corresponding region between the sub-plate 221 and electrode columns.

Referring to Fig. 6, Fig. 7 and Fig. 9, in an embodiment of the present application, in order to accommodate the temperature collecting member 232, the electrical signal collecting member 233 and the connector 234 to be mounted on the FPC 231 respectively, the FPC 231 includes a first segment 2311 and a second segment 2312 connected with each other, the first segment 2311 extending in an alignment direction of each battery 11, the second segment 2312 being provided on a side of the battery 11 in a thickness direction, wherein the first segment 2311 is used for mounting the electrical signal collecting member 233 and the temperature collecting member 232, and the second segment 2312 is used for mounting the connector 234. The FPC 231 is provided by being divided into two segments, which achieves the electrical signal collecting of the battery group 10 and achieves the signal transferring with external structures by the connector 234, for example, the signal transferring with the battery management system (BMS). Also, since the FPC 231 is provided with certain flexibility, which may be bent and mounted on different sides of the battery group 10, thereby facilitating the installation of each component within the battery module 100.

It is to be understood that, the first segment 2311 is provided on an end of a length direction X of the battery 11, that is, extends in an alignment direction of the battery group 10; the second segment 2312 is provided in a thickness direction Y of the battery 11, that is, provided on a large-surface direction of the battery 11, so that the connector 234 mounted on the second segment 2312 may correspond the installation of the BMS.

Referring to Fig. 7, Fig. 8, and Fig. 10 to Fig. 12, when mounting the FPC 231 to the supporting frame 21, the FPC 231 is connected to the supporting frame 21 by hot riveting, that is, the supporting frame 21 is provided with a hot riveting post 213, and the FPC 231 is mounted to the supporting frame 21 by the hot riveting post 213. In such a setup, the mounting stability of the FPC 231 and the supporting frame 21 is ensured.

The temperature collecting member 232 in the present embodiment is a nickel sheet. Referring to Fig. 6, Fig. 7, Fig. 9 and Fig. 10, when connecting the nickel sheet to the sub-plate 221, an amount of the nickel sheets corresponds to an amount of the sub-plates 221; each nickel sheet is connected to each sub-plate 221 correspondingly, so as to achieve the collecting of the voltage information of the battery 11 by the nickel sheet. Specifically, when connecting the nickel sheet to the connection plate 22, the supporting frame 21 is provided with a gap 214, the gap 214 being in communication with the mounting hole 211, so as to connect the nickel sheet between the connection plate 22 and the FPC 231.

Further, the temperature collecting member 232 in the present embodiment is a temperature collecting chip. When mounting the temperature collecting member 232, an amount of the temperature collecting members 232 provided therein may less than the amount of the sub-plates 221. For example, in an alignment direction of the battery 11, the opposite ends and the middle of the first segment 2311 of the FPC 231 are provided with a temperature collecting member 232 respectively. One temperature collecting member 232 achieves the temperature collecting of one region, so as to achieve the monitoring of the battery operating condition by BMS.

Furthermore, referring to Fig. 4, Fig. 7, Fig. 9 and Fig. 10, in order to protect the entire CCS assembly 20 by overcurrent, the collecting structure 23 also includes a fuse protection structure 235, and the fuse protection structure 235 is connected to the FPC 231, specifically, connected to the second segment 2312 of the FPC 231. That is, the fuse protection structure 235 and the connector 234 are collectively provided on the second segment 2312. The CCS assembly 20 may fuse when the current in the CCS assembly 20 is too high, so as to protect the battery group 10.

Specifically, the fuse protection structure 235 in the present embodiment is a patch fuse, and the patch fuse is welded to the second segment 2312. Compared to printing fuses directly on the FPC 231, the fuse protection structure 235 in the present embodiment may be replaced after being damaged, so that the entire FPC 231 may be utilized once again, which provides with an advantage of reducing cost.

When mounting the guiding structure 40 of the present embodiment, since the FPC 231 is provided below the connection plate 22, the guiding structure 40 penetrates the supporting frame 21 and the FPC 231, so as to achieve the connection between the guiding structure 40 and the position of the battery group 10 where the explosion-proof valve 113 is located, which achieves not only the connection between the guiding structure 40 and the battery group 10 but also the installation between the guiding structure 40 and the CCS assembly 20.

Referring to Fig. 6 to Fig. 8, Fig. 11 and Fig. 12, in order to facilitate the installation and formation of the battery module 100, the supporting frame 21 of the present embodiment is provided with a mounting structure 215, and the mounting structure 215 is used for mounting a lateral cap. The mounting structure 215 is integrally formed from the supporting frame 21, which facilitate the installation of the lateral cap of the battery module 100, thereby improving the mounting efficiency of the battery module 100.

Specifically, the mounting structure 215 is provided for detachably connecting the lateral cap, which facilitates the installation of the lateral cap by a detachable connection, and also facilitates the maintenance of the battery group 10 after subsequent dismounting of the lateral cap. Specifically, the mounting structure 215 in the present embodiment includes a connection piece 2151 and a snap-fit protrusion 2152 provided on the connection piece 2151, the connection piece 2151 extending to a top direction of the battery group 10, the snap-fit protrusion 2152 being used for being snap-fitted to the lateral cap.

It is to be understood that, in order to ensure the mounting stability of the lateral cap, the supporting frame 21 may be provided with a plurality of mounting structures 215 in the alignment direction of the battery group 10. In such a setup, the mounting stability of the lateral cap is ensured.

Specifically, the supporting frame 21 in the present embodiment is a polymer composite supporting frame 21 made of polycarbonate (PC) and acrylonitrile butadiene styrene (ABS). The polymer composite support frame 21 made of ABS and PC provides the advantages of high anti-impact strength, good texture, durability and particularly high resistance to thermal deformation, so as to provide a certain level of supporting strength for mounting and fixing the collecting structure 23 and the connection plate 22. Also, compared to the prior art using PC film or hot-pressing film to hot press the connection plate 22 and the collecting structure 23, since the cooling formation of PC film or hot-pressing film requires a relatively long time, the supporting frame 21 prepared from the polymer composite supporting frame 21 made of PC and ABS in the present embodiment may be formed quickly, which further improves the mounting efficiency of the entire CCS assembly 20.

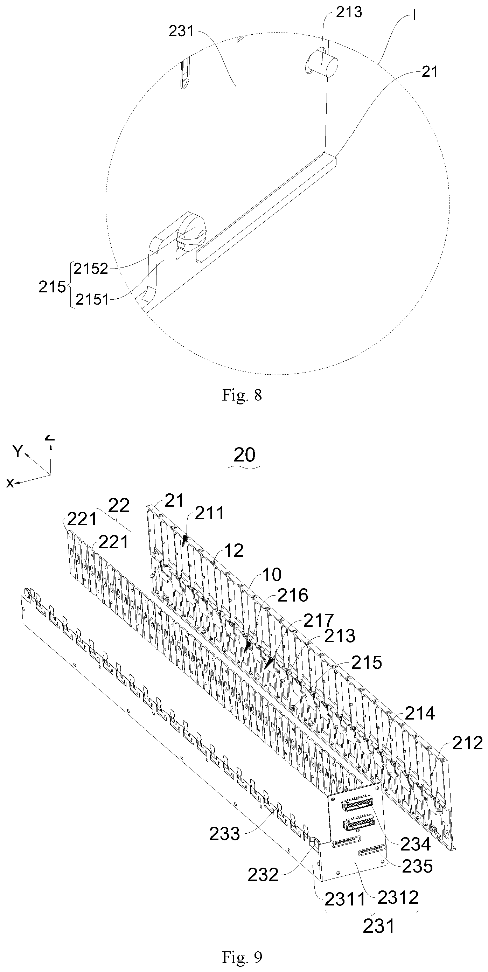

Specifically, referring to Fig. 9, Fig. 11 and Fig. 12, since the guiding structure 40 penetrates the supporting frame 21 and is provided corresponding to the explosion-proof valve 113, in order to facilitate the installation of the guiding structure 40, escaping holes 217 are provided on the positions of the supporting frame 21 corresponding to each explosion-proof valve 113 of the batteries. Also, the supporting frame 21 in the present embodiment is provided with a weight-loss hole 216, and the weight-loss hole 216 is provided for reducing weight of the supporting frame 21.

Specifically, when providing weight-loss holes 216 and escaping holes 217 in the present embodiment, a weight-loss hole 216 and an escaping hole 217 are alternately provided so as to fully utilize the area of each two adjacent escaping holes 217 to provide weight-loss holes 216 to achieve weight reduction.

Referring to Fig. 3, in an embodiment of the present application, when mounting the guiding structure 40, an end of the guiding structure 40 is fixedly connected to the battery group 10, and an opposite end of the guiding structure 40 is detachably connected to a beam 30, so as to ensure the connection sealing between the guiding structure 40 and the battery group 10. By detachably connecting the opposite end of the guiding structure 40 to the beam 30, after assembling the guiding structure 40 and the battery group 10, it is convenient to connect the beam 30 to the guiding structure 40.

Specifically, when mounting the guiding structure 40 to the battery group 10 and the beam 30, an end of the guiding structure 40 is bonded to the battery group 10, and an opposite end of the guiding structure 40 is snap-fitted to the beam 30. After mounting the guiding structure 40 to the battery group 10, the beam 30 is tightly snap-fitted to the guiding structure 40, so as to achieve the installation of the entire battery module 100.

Referring to Fig. 5, Fig. 6, Fig. 16 and Fig. 17, the guiding structure 40 is provided with a plurality of guiding channels 41, each guiding channel 41 being in communication with the pressure relief channel 31, each guiding channel 41 is provided corresponding to each explosion-proof valve 113 of a battery 11. In other embodiments, the guiding channel 41 may be provided for including two sections. One section includes a plurality of sub-channels, and the sub-channel is provided corresponding to each explosion-proof valve 113 of a battery 11. Another section may aggregate the high-temperature and high-pressure gas and fluid flowing from the sub-channels and then forward them to the beam 30, so that conductivity of high-temperature and high-pressure gas and fluid may also be achieved.

Corresponding to that each guiding channel 41 is provided corresponding to each explosion-proof valve 113 of a battery 11, referring to Fig. 5, Fig. 6, Fig. 16 and Fig. 17, the guiding structure 40 includes a plurality of independent guiding member 42, each guiding member 42 being formed each guiding channel 41, each guiding member 42 being provided corresponding to each explosion-proof valve 113 of a battery 11. In such a setup, by providing the guiding structure 40 for including a plurality of independent guiding member 42, each guiding member 42 is formed individually. When connecting the guiding member 42 to the battery group 10, one guiding member 42 is required to be aligned with one explosion-proof valve 113 of the battery 11, so as to easily and accurately install each guiding member 42 individually at the explosion-proof valve 113, which improves the mounting accuracy of the guiding member 42.

In one embodiment, in order to improve the formation efficiency of the entire guiding structure 40 and the mounting efficiency on the battery group 10, the guiding structure 40 may be provided for including a plurality of guiding members 42 and connecting ribs connected between a plurality of guiding members 42. The guiding members 42 are connected to be formed as a whole by connecting ribs. For example, the entire guiding structure 40 may be an integrally provided structure, so as to improve the production efficiency of the entire guiding structure 40. Alternatively, connecting ribs and guiding members 42 are structures formed individually, and then the guiding members 42 are mounted on the connecting ribs, so that the connecting ribs and the guiding members 42 are formed as one mounting unit. In this kind of implementation, when mounting the entire guiding structure 40, the guiding structure 40 may be mounted on the entire battery group 10 all at once, which improves the mounting efficiency. Alternatively, in the other embodiment, when the guiding structure 40 is provided as an integral structure, a plurality of guiding channels 41 may be provided on an integral guiding structure 40, and an amount of the guiding channels 41 is identical to an amount of the explosion-proof valves 113, which may achieve that each explosion-proof valve 113 may relief pressure correspondingly.

A shape of the guiding member 42 of the present embodiment is provided to be adapted to a shape of the explosion-proof valve 113, which may fully achieve the guiding of the electrolyte flowed from the explosion-proof valve 113. For example, when the explosion-proof valve 113 is provided in an oval shape, the guiding member 42 is provided in an oval shape; when the explosion-proof valve 113 is circular, the guiding member 42 is circular. In such a setup, the guiding member 42 may be provided to enclose precisely around the explosion-proof valve 113 to allow the electrolyte to flow out, avoiding the electrolyte from flowing onto the cover of the battery 11 when the cross-sectional area of the guiding member 42 is greater than that of the explosion-proof valve 113; or it avoids the electrolyte from leaking and flowing onto an adjacent battery 11 when the cross-sectional area of the guide member 42 is less than that of the explosion-proof valve 113.

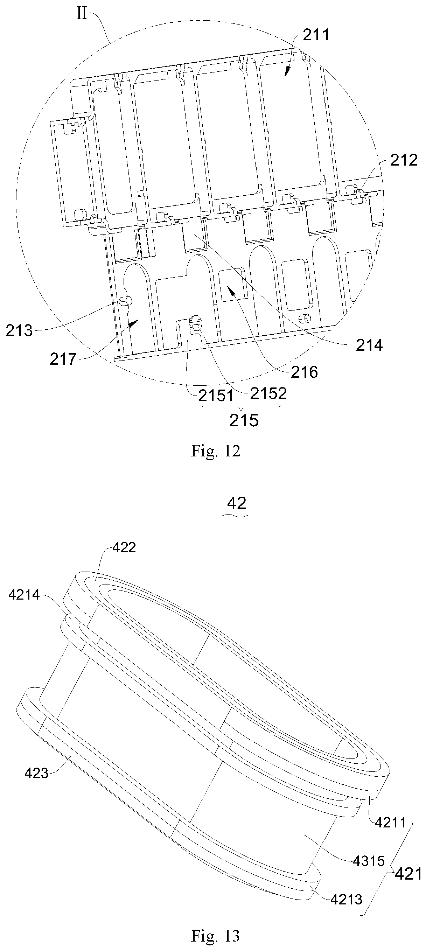

Specifically, referring to Fig. 13 to Fig. 15, when providing the guiding member 42 in the present embodiment, in order to ensure the connecting sealing between the guiding member 42, the battery 11 and the beam 30, the guiding member 42 includes a tube body 421, a first sealing ring 422 and a second sealing ring 423 provided at opposite ends of the tube body 421, the first sealing ring 422 being bonded to the battery 11, the second sealing ring 423 being snap-fitted to the beam 30. In such a setup, by providing the first sealing ring 422 and the second sealing ring 423, the connecting sealing of the tube body 421 at opposite ends with the battery 11 and the beam 30 is ensured respectively, which avoids high-temperature gas or fluid leaking out from the connection of the tube body 421.

Further, the end of the tube body 421 connected to the battery 11 and the first sealing ring 422 are collectively bonded to the battery 11; when mounting the second sealing ring 423 on the beam 30, an interference fit may be adopted to tightly snap-fit the opposite end of the tube body 421 to the beam 30.

It is to be understood that, the tube body 421 in the present embodiment is a metal tube. Metal materials are adopted to prepare the tube, which guarantees sufficient heat-resistance. For example, aluminum or aluminum alloy may be adopted, since the aluminum is at a low cost and resistant to high temperature, which may endure the high-temperature electrolyte. The first sealing ring 422 and the second sealing ring 423 are also required to provide a high temperature resistance, for example, by using a nitrile butadiene rubber composite material or synthetic fiber rubber, which may not only achieve the sealing, but may also provide high temperature resistance.

Referring to Fig. 13 to Fig. 15, in order to facilitate the installation of the first sealing ring 422, the tube body 421 includes a main body 4215, a first mounting platform 4211 and a second mounting platform 4213 that are provided at opposite ends of the main body 4215; the first mounting platform 4211 protrudes from the main body 4215 along a perimeter of the main body 4215, the first sealing ring 422 being provided on the first mounting platform 4211. That is, by providing a first mounting platform 4211 on an end of the main body 4215, a thickness of a tube wall of the end of the main body 4215 towards the battery 11 is increased, which improves the structural strength, which may also facilitate to install the first sealing ring 422 on a first mounting platform 4211 with thicker tube wall, so that the first mounting platform 4211 may provide support to the first sealing ring 422.

Specifically, when providing the first sealing ring 422 on the first mounting platform 4211 in the present embodiment, a first groove 4212 is provided on a side of the first mounting platform 4211 towards the battery 11, and the first sealing ring 422 is snap-fitted into the first groove 4212. That is, by providing the first groove 4212, the first sealing ring 422 is snap-fitted into the first groove 4212, so as to achieve the installation of the first sealing ring 422.

Referring to Fig. 13 to Fig. 15, in order to facilitate installation of the second sealing ring 423, the second mounting platform 4213 protrudes from the main body 4215 along a perimeter of the main body 4215, the second mounting platform 4213 being used for mounting the second sealing ring 423. By providing the second mounting platform 4213, the structural strength of the end of the guiding member 42 towards the beam 30 is increased. Also, the provision of the second mounting platform 4213 facilitates the second sealing ring 423 to be connected to the tube body 421, so that the second mounting platform 4213 may provide support to the second sealing ring 423.

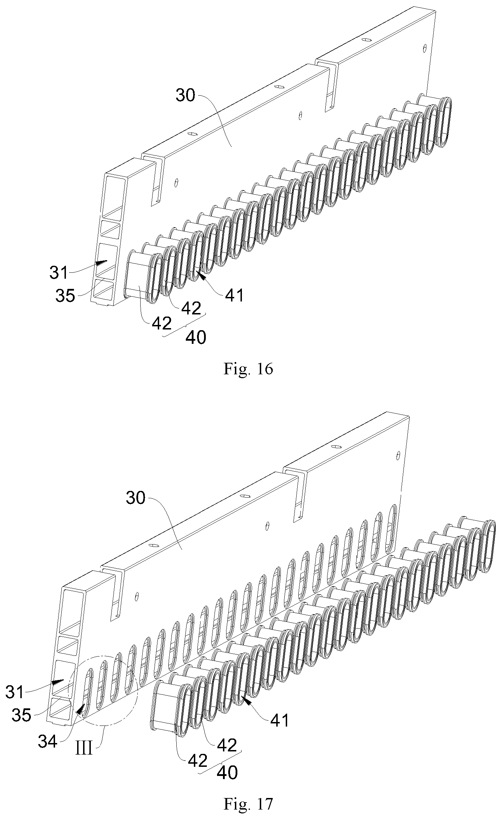

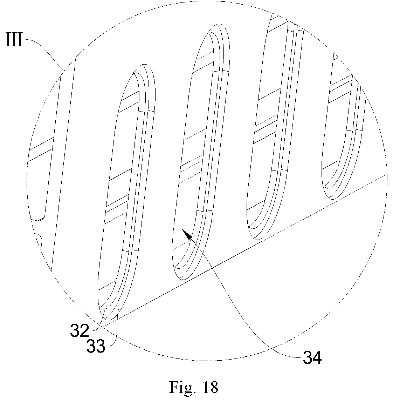

Specifically, the end of the main body 4215 towards the beam 30 in the present embodiment protrudes from the second mounting platform 4213, which facilitates the insertion with the beam 30. When mounting the second sealing ring 423, the second sealing ring 423 is provided on an end surface of the second mounting platform 4213 towards the beam 30. Correspondingly, since the end of the main body 4215 towards the beam 30 protrudes from the second mounting platform 4213, when mounting the end of the guiding member 42 towards the beam 30, referring to Fig. 17 and Fig. 18, the beam 30 is provided with a first stepped snap-fit position 32 and a second stepped snap-fit position 33, the second stepped snap-fit position 33 surrounding an exterior of the first stepped snap-fit position 32, the first stepped snap-fit position 32 being used for being snap-fitted to an end of the tube body 421, the second stepped snap-fit position 33 being used for being snap-fitted to the second sealing ring 423, so as to achieve the detachable mount of the end of the guiding member 42 towards the beam 30.

The schematic installation diagram of the guiding member 42 and the beam 30 is shown in Fig. 16 to Fig. 18. Corresponding to the mounting position of the guiding member 42, the beam 30 is provided with a plurality of through-holes 34, the through-hole 34 being in communication with the pressure relief channel 31, each through-hole 34 being provided corresponding to each guiding member 42.

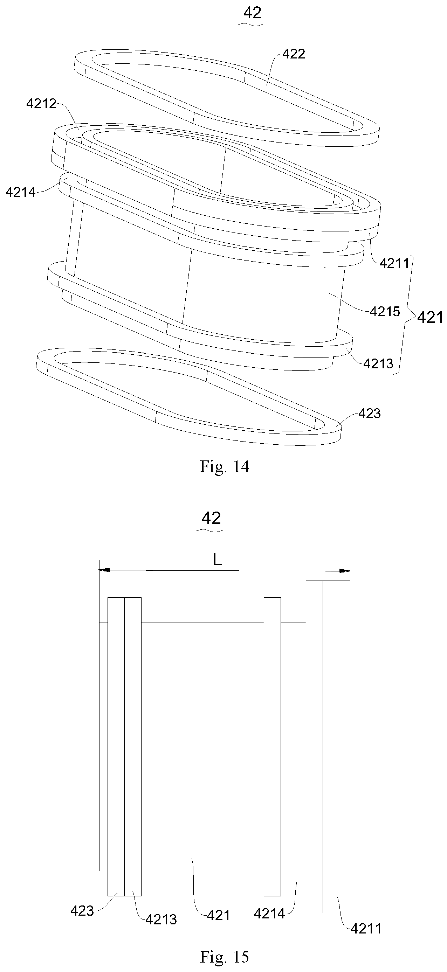

Furthermore, referring to Fig. 15, in order to avoid a length of the guiding structure 40 in the length direction X of the battery 11 from being provided too long and affecting the occupied space of the entire battery module 100, in the present embodiment, a length L of the guiding member 42 in the length direction X of the battery 11 is provided in a range of 2~5cm. In such a setup, after connecting two ends of the guiding member 42 to the beam 30 and the battery group 10 respectively, an appropriate spacing is also provided between the beam 30 and the battery group 10 to ensure the heat dissipation of the battery group 10 through the spacing, without increasing the space occupied by the entire battery module 100 by an excessive amount.

For example, in some embodiments, a length L of the guiding member 42 is provided with such as 2cm, 2.5cm, 3cm, 3.5cm, 4cm, and 5 cm, which is not repeated one by one hereby. Admittedly, in the other embodiments, the length of the guiding member 42 may be provided with other dimensions with the range, which is not limited in the present embodiment. In a specific embodiment of the present application, the length L of the guiding member 42 is provided with 3.0cm. It ensures that an appropriate spacing is provided between the beam 30 and the battery group 10 after the guiding member 42 is mounted to the beam 30 and the battery 11, which ensures the heat dissipation of the battery group 10 and that the entire battery module 100 does not occupy an excessive amount of space.

Furthermore, since the guiding structure 40 penetrates the supporting frame 21, since each guiding member 42 penetrates the supporting frame 21, in order to facilitate the installation of the tube body 421, a snap-fit groove 4214 is provided on a side wall of the first mounting platform 4211, and the supporting frame 21 is snap-fitted into the snap-fit groove 4214. By providing a snap-fit groove 4214, the connection of the tube body 421 and the supporting frame 21 is achieved. Specifically, the snap-fit groove 4214 is provided as a continuous full circle, so that the tube body 421 may provide sufficient contact area with the supporting frame 21 to ensure the connection strength of the supporting frame 21.

Specifically, when connecting the tube body 421 to the supporting frame 21, before the supporting frame 21 is injection molded, the tube body 421 is placed in a corresponding position in the mold. When the supporting frame 21 is injection molded, the supporting frame 21 may be snap-fitted into the snap-fit groove 4214 of the tube body 421, thereby enabling the installation of the tube body 421 and the supporting frame 21.

Referring to Fig. 3, Fig. 16 and Fig. 17, in one embodiment of the present application, in order to reduce the weight of the entire battery module 100 and achieve the pressure relief effect of the beam 30, a pressure relief channel 31 extends in an alignment direction of the battery 11 and penetrates the beam 30. In such a setup, by providing a penetrating pressure relief channel 31, when thermal runaway occurs in the battery 11, the high-temperature gas and fluid ejected from the explosion-proof valve 113 are guided by the guiding member 42 into the beam 30, so as to be flowed out from the beam 30, thereby avoiding the risk of explosion. Also, by providing a penetrating pressure relief channel 31 in the beam 30, it may not only sufficiently export high-temperature gas and fluid through the pressure relief channel 31, but also reduce the weight of the beam 30.

Furthermore, since a penetrating pressure relief channel 31 is provided in the beam 30, in order to ensure the supporting strength of the beam 30, the beam 30 is provided with at least one reinforcing rib 35 in the pressure relief channel 31, the reinforcing rib 35 extending in an alignment direction of the battery 11, i.e., provided in a horizontal direction. In such a setup, by providing a reinforcing rib 35 in the pressure relief channel 31, the supporting strength of the entire beam 30 is increased.

Further, the beam 30 is provided with a plurality of reinforcing ribs 35 in the present embodiment, a plurality of reinforcing ribs 35 is separately provided in the beam 30 in a height direction of the battery 11, so as to increase the supporting strength of the entire beam 30.

It is to be understood that, since the positive electrode column 111 and the negative electrode column 112 of the battery 11 are provided at opposite ends in a length direction X of the battery 11, the battery module 100 of the present embodiment includes two CCS assemblies 20, two guiding structures 40 and two beams 30. Along the length direction X of the battery 11, each of the opposite ends of the battery group 10 is provided with a CCS assembly 20, a guiding structure 40 and a beam 30, one guiding structure 40 being correspondingly connected between one end of the battery group 10 and one beam 30, thereby forming a complete battery module 100.

The battery module 100 mentioned above:
(1) By providing a supporting frame 21, the supporting frame 21 may provide support in a height direction of the battery group 10, and the supporting frame 21 is a structure with a certain degree of hardness, which may facilitate support and installation of the CCS assembly 20. When installing the connection plate 22, the FPC 231, and other electric connectors on the supporting frame 21 to form a CCS assembly 20, the entire CCS assembly 20 may be clamped by mechanization, which achieves the mechanized installation between the CCS assembly 20 and the battery group 10, thereby improving the assembling efficiency of the entire battery module 100.
(1) By providing a guiding structure 40, the guiding structure 40 is provided with a plurality of guiding channels 41, each guiding channel 41 being provided corresponding to an explosion-proof valve 113 of the battery 11. When a thermal runaway occurs in a battery 11, the high-temperature gas or fluid ejected from the explosion-proof valve 113 may flow to the pressure relief channel 31 through the guiding channel 41 and be dispersed through the beam 30, avoiding splashing to the surrounding batteries 11 and affecting the operating safety of the entire battery module 100. Therefore, the safety of the entire battery module 100 is improved by providing a guiding structure 40.

## Claims

1. A battery module (100), comprising:
a battery group (10), the battery group (10) comprising a plurality of batteries (11), the battery (11) comprising a positive electrode column (111) and a negative electrode column (112), the positive electrode column (111) and the negative electrode column (112) being provided oppositely in a length direction of the battery (11);
a CCS (cells contact system) assembly (20), provided on a side of the battery group (10), electrically connected to the battery group (10), used for collecting and transferring an electrical signal of the battery group (10);
a beam (30), provided opposite the CCS assembly (20), a pressure relief channel (31) being provided within the beam (30); and
a guiding structure(40), connected between the battery group (10) and the beam (30), the guiding structure (40) being provided with a plurality of guiding channels (41), each guiding channel (41) being in communication with the pressure relief channel (31), each guiding channel (41) being provided corresponding to an explosion-proof valve (113) of the battery (11), wherein the guiding channel (41) is configured for guiding high-temperature gas and/or high-temperature fluid ejected from the explosion-proof valve (113) into the pressure relief channel (31) when thermal runaway occurs in the battery (11).

2. The battery module (100) according to claim 1, wherein the CCS assembly (20) comprises:
a supporting frame (21), provided in a height direction of the battery (11), supported on a lateral side of the battery group (10);
a connection plate (22), mounted on the supporting frame (21), electrically connected to the positive electrode column (111) and the negative electrode column (112) respectively; and
a collecting structure (23), mounted on the supporting frame (21), electrically connected to the connection plate (22) and the battery group (10) respectively, the collecting structure (23) being used for transferring the electrical signal of the battery group (10).

3. The battery module (100) according to claim 2, wherein the connection plate (22) comprises a plurality of sub-plates (221); the supporting frame (21) is provided with a plurality of mounting holes (211); each sub-plate (221) is mounted into each mounting hole (211); and a reserved gap (214) is provided between the sub-plate (221) and an interior wall of the mounting hole (211).

4. The battery module (100) according to claim 2, wherein the connection plate (22) is snap-fitted to the supporting frame (21).

5. The battery module (100) according to any one of claims 2-4, wherein the collecting structure (23) comprises an FPC (flexible printed circuit) (231), a connector (234) electrically connected to the FPC (231), a plurality of electrical signal collecting members (233) and a plurality of temperature collecting members (232), the electrical signal collecting member (233) being electrically connected to the connection plate (22), the temperature collecting member (232) being electrically connected to the battery (11);
the FPC (231) is connected to the supporting frame (21), comprising a first segment (2311) and a second segment (2312) connected with each other, the first segment (2311) extending in an alignment direction of each battery (11), the second segment (2312) being provided on a side of the battery (11) in a thickness direction, wherein the first segment (2311) is configured for mounting the electrical signal collecting member (233) and the temperature collecting member (232), and the second segment (2312) is configured for mounting the connector (234).

6. The battery module (100) according to claim 5, wherein the collecting structure (23) also comprises a fuse protection structure (235), and the fuse protection structure (235) is provided on the second segment (2312).

7. The battery module (100) according to claim 6, wherein the fuse protection structure (235) is a patch fuse, and the patch fuse is welded to the second segment (2312).

8. The battery module (100) according to any one of claims 2-4, wherein a mounting structure (215) is provided on the supporting frame (21); the mounting structure (215) is configured for mounting a lateral cap; and the mounting structure (215) is detachably connected to the lateral cap.

9. The battery module (100) according to any one of claims 2-4, wherein the supporting frame (21) is a composite supporting frame (21) made of polycarbonate and acrylonitrile butadiene styrene.

10. The battery module (100) according to claim 1, wherein an end of the guiding structure (40) is fixedly connected to the battery group (10), and an opposite end of the guiding structure (40) is detachably connected to a beam (30).

11. The battery module (100) according to claim 1 or 10, wherein the guiding structure (40) comprises a plurality of independent guiding member (42), each guiding member (42) being formed each guiding channel (41), each guiding member (42) being provided corresponding to each explosion-proof valve (113).

12. The battery module (100) according to claim 11, wherein the guiding member (42) comprises a tube body (421), a first sealing ring (422) and a second sealing ring (423) provided at opposite ends of the tube body (421), the first sealing ring (422) being bonded to the battery (11), the second sealing ring (423) being snap-fitted to the beam (30).

13. The battery module (100) according to claim 12, wherein a length range of the guiding member (42) in a length direction of the battery (11) is 2~5cm.

14. The battery module (100) according to claim 12, wherein the tube body (421) comprises a main body (4215), a first mounting platform (4211) and a second mounting platform (4213) that are provided at opposite ends of the main body (4215); the first mounting platform (4211) protrudes from the main body (4215) along a perimeter of the main body (4215), the first mounting platform (4211) being configured for mounting the first sealing ring (422); and the second mounting platform (4213) protrudes from the main body (4215) along a perimeter of the main body (4215), the second mounting platform (4213) being configured for mounting the second sealing ring (423).

15. The battery module (100) according to any one of claims 1-4, wherein the pressure relief channel (31) extends in an alignment direction of the battery (11) and penetrates the beam (30); the beam (30) is provided with at least one reinforcing ribs (35) in the pressure relief channel (31); and the reinforcing rib (35) is provided in a horizontal direction.

## Patentansprüche

1. Batteriemodul (100), umfassend:
eine Batteriegruppe (10), wobei die Batteriegruppe (10) eine Vielzahl von Batterien (11) umfasst, die Batterie (11) eine positive Elektrodensäule (111) und eine negative Elektrodensäule (112) umfasst, die positive Elektrodensäule (111) und die negative Elektrodensäule (112) gegenüberliegend in einer Längsrichtung der Batterie (11) vorgesehen sind;
eine CCS (Zellenkontaktsystem)-Anordnung (20), die an einer Seite der Batteriegruppe (10) vorgesehen ist, die mit der Batteriegruppe (10) elektrisch verbunden ist, die benutzt wird, um ein elektrisches Signal der Batteriegruppe (10) zu sammeln und zu übertragen;
einen Balken (30), der der CCS-Anordnung (20) gegenüberliegend vorgesehen ist, wobei ein Druckentlastungskanal (31) innerhalb des Balkens (30) vorgesehen ist; und
eine Führungsstruktur (40), die zwischen der Batteriegruppe (10) und dem Balken (30) verbunden ist, die Führungsstruktur (40) mit einer Vielzahl von Führungskanälen (41) versehen ist, jeder Führungskanal (41) mit dem Druckentlastungskanal (31) in Kommunikation steht, jeder Führungskanal (41) in Übereinstimmung mit einem explosionssicheren Ventil (113) der Batterie (11) vorgesehen ist, worin der Führungskanal (41) dazu eingerichtet ist, Hochtemperaturgas und/oder Hochtemperaturflüssigkeit, das bzw. die vom explosionssicheren Ventil (113) ausgestoßen wird, in den Druckentlastungskanal (31) zu führen, wenn thermisches Durchgehen in der Batterie (11) erfolgt.

2. Batteriemodul (100) nach Anspruch 1, worin die CCS-Anordnung (20) umfasst:
einen Stützrahmen (21), der in einer Höhenrichtung der Batterie (11) vorgesehen ist, der an einer seitlichen Seite der Batteriegruppe (10) gestützt ist;
eine Verbindungsplatte (22), die am Stützrahmen (21) montiert ist, die jeweils mit der positiven Elektrodensäule (111) und der negativen Elektrodensäule (112) elektrisch verbunden ist; und
eine Sammelstruktur (23), die am Stützrahmen (21) montiert ist, die jeweils mit der Verbindungsplatte (22) und der Batteriegruppe (10) elektrisch verbunden ist, die Sammelstruktur (23) benutzt wird, um das elektrische Signal der Batteriegruppe (10) zu übertragen.

3. Batteriemodul (100) nach Anspruch 2, worin die Verbindungsplatte (22) eine Vielzahl von Unterplatten (221) umfasst; der Stützrahmen (21) mit einer Vielzahl von Montagelöchern (211) versehen ist; jede Unterplatte (221) in jedes Montageloch (211) hinein montiert ist; und eine reservierte Lücke (214) zwischen der Unterplatte (221) und einer Innenwand des Montagelochs (211) vorgesehen ist.

4. Batteriemodul (100) nach Anspruch 2, worin die Verbindungsplatte (22) am Stützrahmen (21) verschnappt ist.

5. Batteriemodul (100) nach einem der Ansprüche 2-4, worin die Sammelstruktur (23) eine FPC (flexible gedruckte Schaltung) (231), einen Verbinder (234), der mit der FPC (231) elektrisch verbunden ist, eine Vielzahl von elektrischen Signalsammelgliedern (233) und eine Vielzahl von Temperatursammelgliedern (232) umfasst, das elektrische Signalsammelglied (233) mit der Verbindungsplatte (22) elektrisch verbunden ist, das Temperatursammelglied (232) mit der Batterie (11) elektrisch verbunden ist;
die FPC (231) mit dem Stützrahmen (21) verbunden ist, umfassend ein erstes Segment (2311) und ein zweites Segment (2312), die miteinander verbunden sind, das erste Segment (2311) sich in einer Ausrichtungsrichtung jeder Batterie (11) erstreckt, das zweite Segment (2312) an einer Seite der Batterie (11) in einer Dickenrichtung vorgesehen ist, worin das erste Segment (2311) dazu eingerichtet ist, das elektrische Signalsammelglied (233) und das Temperatursammelglied (232) zu montieren, und das zweite Segment (2312) dazu eingerichtet ist, den Verbinder (234) zu montieren.

6. Batteriemodul (100) nach Anspruch 5, worin die Sammelstruktur (23) auch eine Absicherungsstruktur (235) umfasst, und die Absicherungsstruktur (235) am zweiten Segment (2312) vorgesehen ist.

7. Batteriemodul (100) nach Anspruch 6, worin die Absicherungsstruktur (235) eine Patch-Sicherung ist, und die Patch-Sicherung am zweiten Segment (2312) geschweißt ist.

8. Batteriemodul (100) nach einem der Ansprüche 2-4, worin eine Montagestruktur (215) am Stützrahmen (21) vorgesehen ist; die Montagestruktur (215) dazu eingerichtet ist, eine seitliche Kappe zu montieren; und die Montagestruktur (215) an der seitlichen Kappe abnehmbar verbunden ist.

9. Batteriemodul (100) nach einem der Ansprüche 2-4, worin der Stützrahmen (21) ein Verbund-Stützrahmen (21) ist, der aus Polycarbonat und Acrylnitril-Butadien-Styrol hergestellt ist.

10. Batteriemodul (100) nach Anspruch 1, worin ein Ende der Führungsstruktur (40) mit der Batteriegruppe (10) fest verbunden ist, und ein entgegengesetztes Ende der Führungsstruktur (40) mit einem Balken (30) abnehmbar verbunden ist.

11. Batteriemodul (100) nach Anspruch 1 oder 10, worin die Führungsstruktur (40) eine Vielzahl von unabhängigen Führungsgliedern (42) umfasst, jedes Führungsglied (42) in jedem Führungskanal (41) ausgebildet ist, jedes Führungsglied (42) in Übereinstimmung mit jedem explosionssicheren Ventil (113) vorgesehen ist.

12. Batteriemodul (100) nach Anspruch 11, worin das Führungsglied (42) einen Rohrkörper (421), einen ersten Dichtungsring (422) und einen zweiten Dichtungsring (423) umfasst, die an entgegengesetzten Enden des Rohrkörpers (421) vorgesehen sind, wobei der erste Dichtungsring (422) an der Batterie (11) verklebt ist, der zweite Dichtungsring (423) am Balken (30) verschnappt ist.

13. Batteriemodul (100) nach Anspruch 12, worin ein Längenbereich des Führungsglieds (42) in einer Längenrichtung der Batterie (11) 2~5cm beträgt.

14. Batteriemodul (100) nach Anspruch 12, worin der Rohrkörper (421) einen Hauptkörper (4215), eine erste Montageplattform (4211) und eine zweite Montageplattform (4213) umfasst, die an entgegengesetzten Enden des Hauptkörpers (4215) vorgesehen sind; die erste Montageplattform (4211) aus dem Hauptkörper (4215) entlang eines Umfangs des Hauptkörpers (4215) vorspringt, die erste Montageplattform (4211) dazu eingerichtet ist, den ersten Dichtungsring (422) zu montieren; und die zweite Montageplattform (4213) aus dem Hauptkörper (4215) entlang eines Umfangs des Hauptkörpers (4215) vorspringt, die zweite Montageplattform (4213) dazu eingerichtet ist, den zweiten Dichtungsring (423) zu montieren.

15. Batteriemodul (100) nach einem der Ansprüche 1-4, worin der Druckentlastungskanal (31) sich in einer Ausrichtungsrichtung der Batterie (11) erstreckt und durch den Balken (30) dringt; der Balken (30) mit zumindest einer Verstärkungsrippe (35) im Druckentlastungskanal (31) versehen ist; und die Verstärkungsrippe (35) in einer horizontalen Richtung vorgesehen ist.

## Revendications

1. Module de batterie (100), comprenant :
un groupe de batteries (10), le groupe de batteries (10) comprenant une pluralité de batteries (11), la batterie (11) comprenant une colonne d'électrode positive (111) et une colonne d'électrode négative (112), la colonne d'électrode positive (111) et la colonne d'électrode négative (112) étant prévues de manière opposée dans une direction de longueur de la batterie (11) ;
un ensemble CCS (système de contact de cellules) (20), prévu sur un côté du groupe de batteries (10), électriquement connecté au groupe de batteries (10), utilisé pour collecter et transférer un signal électrique du groupe de batteries (10) ;
une poutre (30), prévue à l'opposé de l'ensemble CCS (20), un canal de décharge de pression (31) étant prévu à l'intérieur de la poutre (30) ; et
une structure de guidage (40), reliée entre le groupe de batteries (10) et la poutre (30), la structure de guidage (40) étant pourvue d'une pluralité de canaux de guidage (41), chaque canal de guidage (41) étant en communication avec le canal de décharge de pression (31), chaque canal de guidage (41) étant prévu correspondant à une soupape antidéflagrante (113) de la batterie (11), dans lequel le canal de guidage (41) est configuré pour guider un gaz à haute température et/ou un fluide à haute température éjecté de la soupape antidéflagrante (113) dans le canal de décharge de pression (31) lorsque l'emballement thermique se produit dans la batterie (11).

2. Module de batterie (100) selon la revendication 1, dans lequel l'ensemble CCS (20) comprend :
un cadre de support (21), prévu dans une direction de hauteur de la batterie (11), supporté sur un côté latéral du groupe de batteries (10) ;
une plaque de connexion (22), montée sur le cadre de support (21), connectée électriquement à la colonne d'électrode positive (111) et à la colonne d'électrode négative (112) respectivement ; et
une structure de collecte (23), montée sur le cadre de support (21), connectée électriquement à la plaque de connexion (22) et au groupe de batteries (10) respectivement, la structure de collecte (23) étant utilisée pour transférer le signal électrique du groupe de batteries (10).

3. Module de batterie (100) selon la revendication 2, dans lequel la plaque de connexion (22) comprend une pluralité de sous-plaques (221) ; le cadre de support (21) est pourvu d'une pluralité de trous de montage (211) ; chaque sous-plaque (221) est montée dans chaque trou de montage (211) ; et un espace réservé (214) est prévu entre la sous-plaque (221) et une paroi intérieure du trou de montage (211).

4. Module de batterie (100) selon la revendication 2, dans lequel la plaque de connexion (22) est encliquetée sur le cadre de support (21).

5. Module de batterie (100) selon l'une quelconque des revendications 2 à 4, dans lequel la structure de collecte (23) comprend un FPC (circuit imprimé flexible) (231), un connecteur (234) électriquement connecté au FPC (231), une pluralité d'éléments de collecte de signaux électriques (233) et une pluralité d'éléments de collecte de température (232), l'élément de collecte de signaux électriques (233) étant électriquement connecté à la plaque de connexion (22), l'élément de collecte de température (232) étant électriquement connecté à la batterie (11) ;
le FPC (231) est connecté au cadre de support (21), comprenant un premier segment (2311) et un second segment (2312) connectés l'un à l'autre, le premier segment (2311) s'étendant dans une direction d'alignement de chaque batterie (11), le second segment (2312) étant prévu sur un côté de la batterie (11) dans une direction d'épaisseur, dans lequel le premier segment (2311) est configuré pour monter l'élément de collecte de signaux électriques (233) et l'élément de collecte de température (232), et le second segment (2312) est configuré pour monter le connecteur (234).

6. Module de batterie (100) selon la revendication 5, dans lequel la structure collectrice (23) comprend également une structure de protection de fusible (235), et la structure de protection de fusible (235) est prévue sur le second segment (2312).

7. Module de batterie (100) selon la revendication 6, dans lequel la structure de protection de fusible (235) est un fusible en ruban, et le fusible en ruban est soudé au second segment (2312).

8. Module de batterie (100) selon l'une quelconque des revendications 2 à 4, dans lequel une structure de montage (215) est prévue sur le cadre de support (21) ; la structure de montage (215) est configurée pour monter un capuchon latéral ; et la structure de montage (215) est connectée de manière amovible au capuchon latéral.

9. Module de batterie (100) selon l'une quelconque des revendications 2 à 4, dans lequel le cadre de support (21) est un cadre de support composite (21) réalisé en polycarbonate et acrylonitrile butadiène styrène.

10. Module de batterie (100) selon la revendication 1, dans lequel une extrémité de la structure de guidage (40) est connectée de manière fixe au groupe de batteries (10), et une extrémité opposée de la structure de guidage (40) est connectée de manière amovible à une poutre (30).

11. Module de batterie (100) selon la revendication 1 ou 10, dans lequel la structure de guidage (40) comprend une pluralité d'éléments de guidage indépendants (42), chaque élément de guidage (42) étant formé chaque canal de guidage (41), chaque élément de guidage (42) étant prévu correspondant à chaque soupape antidéflagrante (113).

12. Module de batterie (100) selon la revendication 11, dans lequel l'élément de guidage (42) comprend un corps de tube (421), une première bague d'étanchéité (422) et une seconde bague d'étanchéité (423) disposées aux extrémités opposées du corps de tube (421), la première bague d'étanchéité (422) étant liée à la batterie (11), la seconde bague d'étanchéité (423) étant fixée par encliquetage à la poutre (30).

13. Module de batterie (100) selon la revendication 12, dans lequel une plage de longueur de l'élément de guidage (42) dans une direction de longueur de la batterie (11) est de 2~5 cm.

14. Module de batterie (100) selon la revendication 12, dans lequel le corps de tube (421) comprend un corps principal (4215), une première plate-forme de montage (4211) et une seconde plate-forme de montage (4213) qui sont prévues aux extrémités opposées du corps principal (4215) ; la première plate-forme de montage (4211) fait saillie du corps principal (4215) le long d'un périmètre du corps principal (4215), la première plate-forme de montage (4211) étant configurée pour monter la première bague d'étanchéité (422) ; et la seconde plate-forme de montage (4213) fait saillie du corps principal (4215) le long d'un périmètre du corps principal (4215), la seconde plate-forme de montage (4213) étant configurée pour monter la seconde bague d'étanchéité (423).

15. Module de batterie (100) selon l'une quelconque des revendications 1 à 4, dans lequel le canal de décharge de pression (31) s'étend dans une direction d'alignement de la batterie (11) et pénètre dans la poutre (30) ; la poutre (30) est pourvue d'au moins une nervure de renforcement (35) dans le canal de décharge de pression (31) ; et la nervure de renforcement (35) est pourvue dans une direction horizontale.
